# EUROPEAN PATENT SPECIFICATION

(11) **EP 3 764 025 B1**
(45) Date of publication and mention of the grant of the patent: **13.04.2022**
(21) Application number: 18908396.7
(22) Date of filing: 09.03.2018
(51) Int. Cl.: F25B 49/02, F25B 13/00

(54) **REFRIGERATION CYCLE APPARATUS**
KÄLTEKREISLAUFVORRICHTUNG
APPAREIL À CYCLE FRIGORIFIQUE

(43) Date of publication of application: 13.01.2021
(73) Proprietor: Mitsubishi Electric Corporation, Tokyo 100-8310 (JP)
(72) Inventor: ITO, Daisuke, Tokyo 1008310 (JP); NAKAMURA, Shin, Tokyo 1008310 (JP); KATO, Shun, Tokyo 1008310 (JP); ISHIBASHI, Akira, Tokyo 1008310 (JP)
(74) Representative: Pfenning, Meinig & Partner mbB
(86) International application number: PCT/JP2018/009277
(87) International publication number: WO 2019/171588

(56) References cited:
- WO-A1-2005/098328
- WO-A1-2010/106821
- WO-A1-2016/051606
- GB-A- 1 226 452
- JP-A- H 028 657
- JP-A- H05 223 358
- JP-A- 2001 227 822
- JP-A- 2001 227 822
- JP-A- 2003 148 755
- JP-A- 2004 156 823
- JP-A- 2009 270 775
- US-A1- 2016 025 396
- Ding Guoliang ET AL: "DEVELOPING LOW CHARGE R290 ROOM AIR CONDITIONER BY USING SMALLER DIAMETER COPPER TUBES", , 27 June 2012 (2012-06-27), XP055772936, Retrieved from the Internet: URL:https://microgroove.net/sites/default/ files/Paper_No_183-Developing_Low_Charge_R 290_Room_Air_Conditioner_by_Using_Smaller_ Diameter_Copper_Tubes.pdf [retrieved on 2021-02-05]

## Description

### Technical Field

The present invention relates to a refrigeration cycle apparatus provided with a refrigerant circuit including a compressor, a condenser, a pressure-reducing device and an evaporator.

### Background Art

Conventionally, air-conditioning apparatuses using R290 refrigerants, i.e. propane, with a small global warming potential (GWP) as refrigerants in refrigerant circuits in order to reduce an influence to the global warming, have been known (See, for example, patent literature 1).

### Citation List

### Patent Literature

[PTL 1] JP 2001-227822 A

### Summary of Invention

### Technical Problem

In the conventional air-conditioning apparatus described in patent literature 1, propane having combustibility is used as refrigerant. Thus, an amount of the refrigerant in the air-conditioning apparatus is required to be reduced to the extent that a concentration of the refrigerant in air is less than a lower limit of a combustible concentration, even when the refrigerant leaks out in a room. However, as the amount of the refrigerant in the air-conditioning apparatus decreases, a coefficient of performance (COP) of the air-conditioning apparatus degrades.

The present invention has been made to solve the problem described above, and has an object to obtain a refrigeration cycle apparatus capable of reducing an amount of refrigerant while suppressing degradation of a coefficient of performance.

### Solution to Problem

The invention is set out in the appended set of claims.

### Advantageous Effects of Invention

With the refrigeration cycle apparatus according to the present invention, the amount of refrigerant in the refrigerant circuit can be reduced while suppressing degradation of the coefficient of performance of the refrigeration cycle apparatus.

### Brief Description of Drawings

FIG. 1 is a diagram depicting a configuration of a refrigeration cycle apparatus according to a first embodiment not according to the present invention.
FIG. 2 is a graph depicting a relation between a degree of superheat of refrigerant at an entrance port of a compressor shown in FIG. 1 and a rate of decrease of a required amount of refrigerant in the refrigerant circuit with respect to a permissible amount of refrigerant.
FIG. 3 is a graph depicting a relation between a degree of suction superheat of the compressor and theoretically derived coefficients of performance for R290 refrigerant, R32 refrigerant, and R410A refrigerant, respectively, used as the refrigerant in the refrigerant circuit shown in FIG. 1.
FIG. 4 is a graph depicting a relation between a degree of suction superheat of a compressor of a refrigeration cycle apparatus according to a second embodiment not according to the present invention and a rate of decrease of a coefficient of performance according to the second embodiment with respect to that of a comparative example in which R32 refrigerant is used as refrigerant in a refrigerant circuit.
FIG. 5 is a diagram depicting a configuration of a refrigeration cycle apparatus according to a fourth embodiment according to the present invention.
FIG. 6 is a diagram depicting a configuration of a refrigeration cycle apparatus according to a fifth embodiment not according to the present invention.

### Description of Embodiments

In the following, embodiment according to the present invention will be described with reference to the drawings.

### First embodiment (not according to the invention)

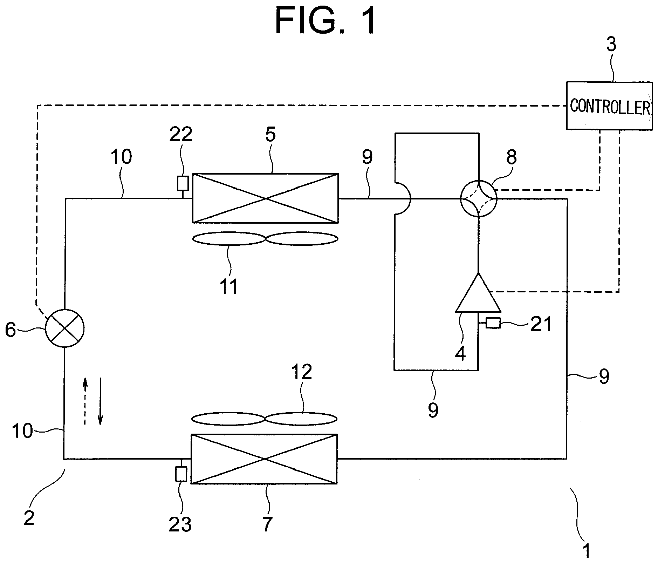

FIG. 1 is a diagram depicting a configuration of a refrigeration cycle apparatus according to a first embodiment not according to the present invention. In FIG. 1, a refrigeration cycle apparatus 1 includes a refrigerant circuit 2, in which refrigerant can circulate; and a controller 3 that controls the refrigerant circuit 2. In the embodiment, the refrigeration cycle apparatus 1 is an air-conditioning apparatus. Moreover, in the embodiment, propane, that is R290 refrigerant, is used as refrigerant in the refrigerant circuit 2.

The refrigerant circuit 2 includes a compressor 4, a first heat exchanger 5, an expansion valve 6, a second heat exchanger 7, and a four-way valve 8. In the embodiment, the compressor 4, the first heat exchanger 5, the expansion valve 6 and the four-way valve 8 are provided in an outdoor unit, and the second heat exchanger 7 is provided in an indoor unit.

Each of the first heat exchanger 5 and the second heat exchanger 7 is connected to the four-way valve 8 via a gas-side refrigerant pipe 9. A gas-side refrigerant path for guiding gaseous refrigerant is formed in each of the four-way valve 8 and the gas-side refrigerant pipe 9. According to the above-described configuration, each of the first heat exchanger 5 and the second heat exchanger 7 is connected to the compressor 4 via the gas-side refrigerant path. In the embodiment, an inner diameter of the gas-side refrigerant path is 7.92 mm or more and 14.28 mm or less. Moreover, in the embodiment, a length of the gas-side refrigerant path from the first heat exchanger 5 to the second heat exchanger 7 is 5 m or less.

Moreover, each of the first heat exchanger 5 and the second heat exchanger 7 is connected to the expansion valve 6 via a liquid-side refrigerant pipe 10. A liquid-side refrigerant path for guiding liquid refrigerant is formed in the liquid-side refrigerant pipe 10. According to the above-described configuration, each of the first heat exchanger 5 and the second heat exchanger 7 is connected to the expansion valve 6 via the liquid-side refrigerant path. In the embodiment, an inner diameter of the liquid-side refrigerant path is 4.75 mm or more and 11.1 mm or less. Moreover, in the embodiment, a length of the liquid-side refrigerant path from the first heat exchanger 5 to the second heat exchanger 7 is 5 m or less.

In the refrigerant circuit 2, a refrigeration cycle process is performed, in which refrigerant circulates through the compressor 4, the first heat exchanger 5, the expansion valve 6 and the second heat exchanger 7 while changing in phase, according to an operation of the compressor 4.

The outdoor unit is provided with a first fan 11 that forcibly sends outdoor air to the first heat exchanger 5. The indoor unit is provided with a second fan 12 that forcibly sends indoor air to the second heat exchanger 7. Moreover, each of the first heat exchanger 5 and the second heat exchanger 7 includes a heat transfer pipe in which refrigerant flows.

In the first heat exchanger 5, heat exchange is performed between refrigerant that flows in the heat transfer pipe of the first heat exchanger 5 and a current of outdoor air generated by an operation of the first fan 11. In the second heat exchanger 7, heat exchange is performed between refrigerant that flows in the heat transfer pipe of the second heat exchanger 7 and a current of indoor air generated by an operation of the second fan 12. In the embodiment, an inner diameter of the heat transfer pipe of each of the first heat exchanger 5 and the second heat exchanger 7 is 5 mm.

The compressor 4 compresses gaseous refrigerant. In the compressor 4, polyalkyleneglycol (PAG)-based oil having ether bond, polyolester (POE)-based oil having ester bond or the like is used as lubricant.

The expansion valve 6 is a pressure reducing device that causes liquid refrigerant to expand and thereby reduces a pressure of the refrigerant. According to the above-described operation, at an exit port of refrigerant of the expansion valve 6, the refrigerant is in a gas-liquid two-phase state. The expansion valve 6 is an electric expansion valve that can control a flow rate of refrigerant. The flow rate of refrigerant that flows through the expansion valve 6 is controlled according to an opening degree of the expansion valve 6.

An operation of the refrigeration cycle apparatus 1 can be switched between a cooling operation and a heating operation. The four-way valve 8 is an electromagnetic valve that switches a flow direction of refrigerant flowing in a gas-side refrigerant path in response to the switching operation in the refrigeration cycle apparatus 1 between the cooling operation and the heating operation. The four-way valve 8, during the cooling operation, leads refrigerant from the compressor 4 to the first heat exchanger 5, and leads refrigerant from the second heat exchanger 7 to the compressor 4. Moreover, the four-way valve 8, during the heating operation, leads the refrigerant from the compressor 4 to the second heat exchanger 7, and leads the refrigerant from the first heat exchanger 5 to the compressor 4. In FIG. 1, a flow direction of refrigerant during the cooling operation is shown by a solid arrow, and a flow direction of refrigerant during the heating operation is shown by a dashed arrow.

The controller 3 controls the four-way valve 8, and thereby switches between the cooling operation and the heating operation of the refrigeration cycle apparatus 1. Moreover, the controller 3 activates the compressor 4, and thereby starts an operation of the refrigerant circuit 2. The controller 3 starts the operation of the refrigerant circuit 2 in a state where the expansion valve 6 is fully opened.

During the cooling operation of the refrigeration cycle apparatus 1, gaseous refrigerant compressed by the compressor 4 is sent to the first heat exchanger 5 through a gas-side refrigerant path. In the first heat exchanger 5, heat is radiated from the refrigerant flowing in the heat transfer pipe to outdoor air, and thereby the refrigerant is condensed. Then, the condensed refrigerant is sent to the expansion valve 6 through the liquid-side refrigerant path. In the expansion valve 6, the pressure of the liquid refrigerant is reduced, and the liquid refrigerant becomes refrigerant in a gas-liquid two-phase state. The refrigerant with the pressure reduced by the expansion valve 6 is sent to the second heat exchanger 7 through the liquid-side refrigerant path. Then, the refrigerant with the reduced pressure absorbs heat from indoor air at the second heat exchanger 7, and evaporates. The evaporated refrigerant returns to the compressor 4 through the gas-side refrigerant path. As described above, during the cooling operation of the refrigeration cycle apparatus 1, the first heat exchanger 5 operates as a condenser, and the second heat exchanger 7 operates as an evaporator.

During the heating operation of the refrigeration cycle apparatus 1, gaseous refrigerant compressed by the compressor 4 is sent to the second heat exchanger 7 through the gas-side refrigerant path. In the second heat exchanger 7, heat is radiated from the refrigerant flowing in the heat transfer pipe to indoor air, and thereby the refrigerant is condensed. Then, the condensed refrigerant is sent to the expansion valve 6 through the liquid-side refrigerant path. In the expansion valve 6, the pressure of the liquid refrigerant is reduced, and the liquid refrigerant becomes refrigerant in a gas-liquid two-phase state. The refrigerant with the pressure reduced by the expansion valve 6 is sent to the first heat exchanger 5 through the liquid-side refrigerant path. Then, the refrigerant with the reduced pressure absorbs heat from outdoor air at the first heat exchanger 5, and evaporates. The evaporated refrigerant returns to the compressor 4 through the gas-side refrigeration path. As described above, during the heating operation of the refrigeration cycle apparatus 1, the first heat exchanger 5 operates as an evaporator, and the second heat exchanger 7 operates as a condenser.

At the entrance port for refrigerant of the compressor 4, a suction temperature sensor 21 for detecting temperature of refrigerant is arranged. At a refrigerant port on the expansion valve 6 side of the first heat exchanger 5, a first refrigerant port temperature sensor 22 for detecting temperature of refrigerant. The refrigerant port on the expansion valve 6 side of the first heat exchanger 5 is an exit port for refrigerant of the first heat exchanger 5 when the first heat exchanger 5 operates as a condenser, and is an entrance port for refrigerant of the first heat exchanger 5 when the first heat exchanger 5 operates as an evaporator. At a refrigerant port on the expansion valve 6 side of the second heat exchanger 7, a second refrigerant port temperature sensor 23 for detecting temperature of refrigerant. The refrigerant port on the expansion valve 6 side of the second heat exchanger 7 is an exit port for refrigerant of the second heat exchanger 7 when the second heat exchanger 7 operates as a condenser, and is an entrance port for refrigerant of the second heat exchanger 7 when the second heat exchanger 7 operates as an evaporator.

Data about the temperatures detected by the suction temperature sensor 21, the first refrigerant port temperature sensor 22 and the second refrigerant port temperature sensor 23 are sent to the controller 3. The controller 3 causes the refrigerant circuit 2 to start operation, and then controls the opening degree of the expansion valve 6 based on the data about the temperatures detected by the suction temperature sensor 21, the first refrigerant port temperature sensor 22 and the second refrigerant port temperature sensor 23.

R290 refrigerant that circulates through the refrigerant circuit 2 is combustible refrigerant. Thus, in the refrigeration cycle apparatus 1, an amount of the refrigerant enclosed in the refrigerant circuit 2 is required to be less than or equal to a permissible amount of refrigerant so that even when the combustible refrigerant leaks out in a room from the refrigerant circuit 2, a concentration of the refrigerant in air is less than the lower limit of a combustible concentration. The permissible amount of refrigerant is determined based on a floor area of the room, an installation height of the indoor unit, and the lower limit of the combustible concentration of refrigerant in air, as regulated by IEC 60335-2-40 ED6.

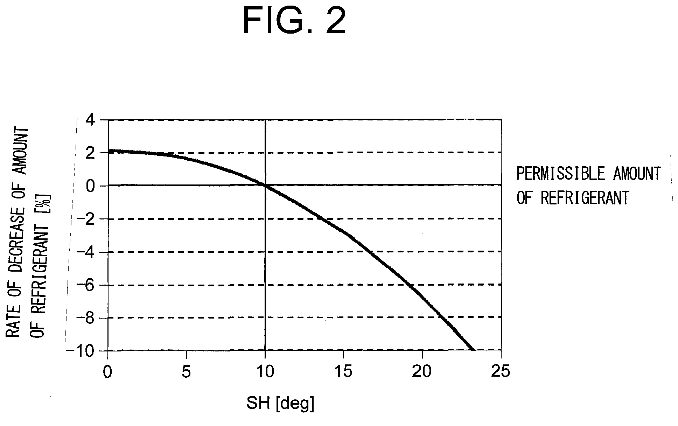

FIG. 2 is a graph depicting a relation between a degree of superheat SH of refrigerant at the entrance port of the compressor 4 shown in FIG. 1 and a rate of decrease of a required amount of refrigerant in the refrigerant circuit 2 with respect to a permissible amount of refrigerant. In the refrigeration cycle apparatus 1, when the degree of superheat SH of refrigerant at the entrance port of the compressor 4 (in the following, referred to as a "degree of suction superheat SH of the compressor 4") increases, a gas region in the heat exchanger of the first heat exchanger 5 and the second heat exchanger 7 that operates as an evaporator becomes greater. Thus, in the refrigeration cycle apparatus 1, as the degree of suction superheat SH of the compressor 4 increases, the required amount of refrigerant in the refrigerant circuit 2 becomes smaller. As shown in FIG. 2, in the refrigeration cycle apparatus 1, the required amount of refrigerant in the refrigerant circuit 2 is found to be less than or equal to the permissible amount of refrigerant when the degree of suction superheat SH of the compressor 4 is greater than or equal to 10 degrees.

The degree of suction superheat SH of the compressor 4 is obtained based on the temperature of refrigerant at the entrance port of the compressor 4 and the temperature of refrigerant at the entrance port of the evaporator. Moreover, the degree of suction superheat SH of the compressor 4 is adjustable by controlling the opening degree of the expansion valve 6. Thus, the controller 3 controls the opening degree of the expansion valve 6 based on the temperature of refrigerant at the entrance port of the compressor 4 and the temperature of refrigerant at the entrance port of the evaporator, and thereby makes the degree of suction superheat SH of the compressor 4 greater than or equal to 10 degrees.

Specifically, the temperature of refrigerant at the entrance port of the compressor 4 is detected by the suction temperature sensor 21. The temperature of refrigerant at the entrance port of the evaporator during the cooling operation is detected by the second refrigerant port temperature sensor 23. Moreover, the temperature of refrigerant at the entrance port of the evaporator during the heating operation is detected by the first refrigerant port temperature sensor 22. Thus, during the cooling operation, the controller 3 controls the opening degree of the expansion valve 6 based on the data about the temperatures detected by the suction temperature sensor 21 and the second refrigerant port temperature sensor 23, respectively, and thereby makes the degree of suction superheat SH of the embodiment 4 greater than or equal to 10 degrees. Moreover, during the heating operation, the controller 3 controls the opening degree of the expansion valve 6 based on the data about the temperatures detected the suction temperature sensor 21 and the first refrigeration port temperature sensor 22, respectively, and thereby the degree of suction superheat SH of the embodiment 4 greater than or equal to 10 degrees. Accordingly, the amount of refrigerant circulating through the refrigerant circuit 2 is made less than or equal to the permissible amount of refrigerant.

Next, an example in which R32 refrigerant having a global warming potential (GWP) greater than that of R290 refrigerant is used as refrigerant in the refrigerant circuit 2 will be examined as a comparative example. During an operation of the refrigeration cycle apparatus according to the comparative example, due to the physical property of the R32 refrigerant, a discharge temperature of refrigerant at the exit port of the compressor is liable to rise. Thus, during the operation of the refrigeration cycle apparatus according to the comparative example, the degree of suction superheat SH of the compressor is limited to be within a range of 0 °C to 2 °C, in order to prevent a failure of the compressor due to the rise of the temperature of refrigerant. In the refrigeration cycle apparatus according to the comparative example, an upper limit of the discharge temperature of refrigerant at the exit port of the compressor is set to fall within a range of 100 °C to 120 °C.

For the compressor operating with the same efficiency, a rise amount of discharge temperature of refrigerant per 1 °C of temperature rise of the degree of suction superheat SH of the compressor is 1.13 °C/°C in the case where R32 refrigerant is used in the refrigerant circuit, but 0.95 °C/°C in the case where R290 refrigerant is used in the refrigerant circuit. As described above, the rise amount of the discharge temperature of refrigerant at the exit port of the compressor with respect to the amount of rise of the degree of suction superheat SH of the compressor in the case of using R290 refrigerant as the refrigerant in the refrigerant circuit is less than that in the case of using R32 refrigerant as the refrigerant in the refrigerant circuit. Thus, in the embodiment in which R290 refrigerant is used as the refrigerant in the refrigerant circuit 2, the rise of the discharge temperature of refrigerant at the exit port of the compressor 4 is controlled to be less than that in the comparative example, and the degree of suction superheat SH of the compressor 4 can be made greater than or equal to 10 degrees.

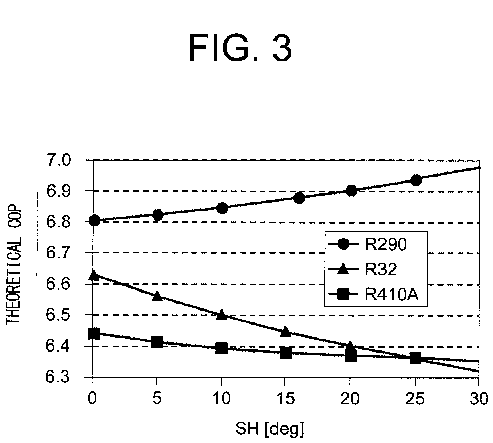

FIG. 3 is a graph depicting a relation between the degree of suction superheat SH of the compressor 4 and theoretically derived coefficients of performance (in the following, referred to as a "theoretical COP") for R290 refrigerant, R32 refrigerant, and R410A refrigerant, respectively, used as refrigerant in the refrigerant circuit 2 shown in FIG. 1. As shown in FIG. 3, each of the theoretical COP for the R32 refrigerant and the theoretical COP for the R410A refrigerant becomes smaller as the degree of suction superheat SH of the compressor 4 increases. In contrast, the theoretical COP for the R290 refrigerant is found to become greater as the degree of suction superheat SH of the compressor 4 increases. The above-described difference in the theoretical COP reflects difference between the physical property of the R290 refrigerant and the physical properties of the R32 and R410A refrigerants.

Specifically, an evaporation latent heat of the R290 refrigerant is 1.2 times greater than the evaporation latent heat of the R32 refrigerant. Moreover, refrigeration effect of the R290 refrigerant against the increase of the degree of suction superheat SH of the compressor 4 is greater than that of the R32 refrigerant. The refrigeration effect is expressed by a difference between enthalpies of refrigerant at the entrance port and the exit port of the evaporator. Furthermore, for the same degree of suction superheat SH of the compressor 4, an amount of R290 refrigerant required for obtaining a predetermined performance of the refrigeration cycle apparatus is 0.8 times as great as an amount of R32 refrigerant. Thus, in the embodiment in which R290 refrigerant is used as the refrigerant circulating through the refrigerant circuit 2, the decrease in the amount of refrigerant due to the increase of the degree of suction superheat SH of the compressor 4 can be compensated by an effect of refrigeration. Thus, in the embodiment in which R290 refrigerant is used as the refrigerant circulating through the refrigerant circuit 2, workload in the compressor 4 becomes smaller according to the decrease in the amount of refrigerant circulating through the refrigerant circuit 2. Thus, in the embodiment in which the R290 refrigerant is used, even when the amount of refrigerant circulating through the refrigerant circuit 2 becomes smaller due to the increase of the degree of suction superheat SH of the compressor 4, the coefficient of performance (COP) of the refrigeration cycle apparatus 1 is prevented from degrading.

In the above-described refrigeration cycle apparatus 1, R290 refrigerant, i.e. propane, is used as refrigerant circulating through the refrigerant circuit 2. Moreover, the degree of suction superheat SH of the compressor 4 is set to be greater than or equal to 10 degrees under the control of the controller 3. Thus, the degree of suction superheat SH of the compressor 4 can be made greater while preventing the discharge temperature of refrigerant at the exit port of the compressor 4 from increasing. According to the above-described configuration, the amount of refrigerant circulating through the refrigerant circuit 2 can be made less than or equal to the permissible amount of refrigerant. Moreover, because R290 refrigerant is used as refrigerant circulating through the refrigerant circuit 2, even when the amount of refrigerant circulating through the refrigerant circuit 2 becomes smaller due to the increase of the degree of suction superheat SH of the compressor 4, the coefficient of performance (COP) of the refrigeration cycle apparatus 1 is prevented from degrading.

Moreover, in the embodiment, the inner diameter of the heat transfer pipe of each of the first heat exchanger 5 and the second heat exchanger 7 is 5 mm. Then, an efficiency of heat exchange between air and refrigerant can be improved in each of the first heat exchanger 5 and the second heat exchanger 7. Thus, when the inner diameter of the heat transfer pipe of each of the first heat exchanger 5 and the second heat exchanger 7 is set to 5 mm, the amount of refrigerant circulating through the refrigerant circuit 2 can be further and certainly reduced. Specifically, the amount of refrigerant circulating through the refrigerant circuit 2 can be further and certainly reduced to the permissible amount of refrigerant or less, while suppressing degradation of the coefficient of performance (COP) of the refrigeration cycle apparatus 1.

Moreover, in the embodiment, the inner diameter of the gas-side refrigerant path is 7.92 mm or more and 14.28 mm or less. Moreover, in the embodiment, the inner diameter of the liquid-side refrigerant path is 4.75 mm or more and 11.1 mm or less. Furthermore, in the embodiment, the length of each of the gas-side refrigerant path and the liquid-side refrigerant path is 5 m or less. Then, the inner diameter and the length of each of the gas-side refrigerant path and the liquid-side refrigerant path can be determined according to the changing in phase of the refrigerant. Thus, it is possible to suppress degradation of efficiency of circulation of refrigerant through the refrigerant circuit 2, and the performance of the refrigeration cycle apparatus 1 can be improved.

In the embodiment, the inner diameter of the heat transfer pipe of each of the first heat exchanger 5 and the second heat exchanger 7 is 5 mm. However, the inner diameter of the heat transfer pipe of each of the first heat exchanger 5 and the second heat exchanger 7 may be less than 5 mm. According to the above-described configuration, the efficiency of heat exchange can be further improved in each of the first heat exchanger 5 and the second heat exchanger 7. Thus, the amount of refrigerant circulating through the refrigerant circuit 2 can be further and certainly reduced to the permissible amount of refrigerant or less, while suppressing degradation of the coefficient of performance (COP) of the refrigeration cycle apparatus 1.

### Second embodiment (not according to the invention)

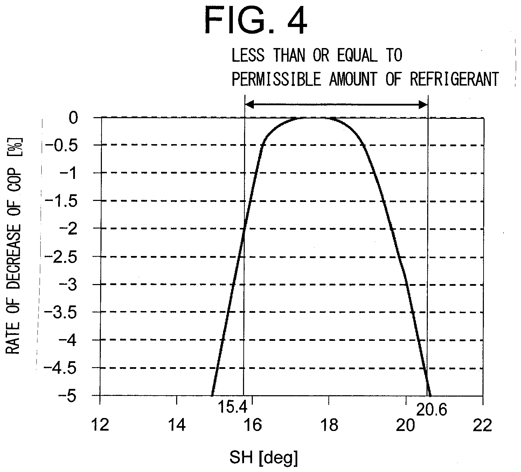

FIG. 4 is a graph depicting a relation between a degree of suction superheat SH of a compressor of a refrigeration cycle apparatus according to a second embodiment and a rate of decrease of a coefficient of performance (COP) according to the second embodiment with respect to that of the comparative example in which R32 refrigerant is used as refrigerant in a refrigerant circuit. FIG. 4 shows a coefficient of performance (COP) for an operation of the refrigeration cycle apparatus taking into account an influence of pressure loss in refrigerant circulating through the refrigerant circuit.

A configuration of the refrigeration cycle apparatus according to the second embodiment is the same as the configuration of the refrigeration cycle apparatus 1 according to the first embodiment shown in FIG. 1. Moreover, also in the second embodiment, R290 refrigerant is used as refrigerant circulating through the refrigerant circuit 2.

The rate of decrease of a coefficient of performance (COP) according to the second embodiment, in which R290 refrigerant is used, with respect to the rate of decrease of the comparative example, in which R32 refrigerant is used, becomes greater as the degree of suction superheat SH of the compressor 4 separates from about 17.5 degrees, as shown in FIG. 4. Specifically, when the degree of suction superheat SH of the compressor 4 becomes less than about 17.5 degrees, with rising of an evaporation temperature and increasing of an evaporation pressure of the evaporator, a suction density of R290 refrigerant at the entrance port of the compressor 4 increases and the amount of the R290 refrigerant circulating through the refrigerant circuit 2 increases. Accordingly, when the degree of suction superheat SH of the compressor 4 becomes less than about 17.5 degrees, a workload of the compressor 4 increases and the coefficient of performance (COP) of the refrigeration cycle apparatus 1 degrades. Moreover, when the degree of suction superheat SH of the compressor 4 becomes greater than about 17.5 degrees, a gas region in the evaporator increases and a performance of the evaporator degrades. In order to suppress the degradation of the performance of the evaporator, it is possible to decrease the evaporation temperature in the refrigeration cycle apparatus 1 to increase a difference in temperature between the R290 refrigerant and air. However, the decrease in the evaporation temperature leads to an increase in a compression ratio of refrigerant in the compressor 4, and thereby increases the workload of the compressor 4. Accordingly, even when the degree of suction superheat SH of the compressor 4 becomes greater than about 17.5 degrees, the coefficient of performance (COP) of the refrigeration cycle apparatus 1 degrades.

It is possible to improve the coefficient of performance (COP) of the refrigeration cycle apparatus 1 by adding R290 refrigerant to the refrigerant in the refrigerant circuit 2. Specifically, in the refrigeration cycle apparatus 1, when R290 refrigerant of an amount of 1.55% of the refrigerant in the refrigerant circuit 2 is added to the refrigerant, the coefficient of performance (COP) is improved by 1%. Furthermore, when the degree of suction superheat SH of the compressor 4 becomes greater than about 17.5 degrees, because the amount of the refrigerant circulating through the refrigerant circuit 2 decreases, the addition amount of refrigerant in order to improve the coefficient of performance (COP) of the refrigeration cycle apparatus 1 becomes greater than the addition amount of refrigerant when the degree of suction superheat SH of the compressor 4 becomes less than about 17.5 degrees.

The addition of R290 refrigerant to the refrigerant in the refrigerant circuit 2 is allowed until the amount of the refrigerant in the refrigerant circuit 2 reaches the permissible amount of refrigerant. In the case where the degree of suction superheat SH of the compressor 4 is less than about 17.5 degrees, while R290 refrigerant is added to the refrigerant in the refrigerant circuit 2 as long as the amount of the refrigerant in the refrigerant circuit 2 is less than or equal to the permissible amount of refrigerant, when the degree of suction superheat SH of the compressor 4 is greater than or equal to 15.4 degrees, the coefficient of performance (COP) of the refrigeration cycle apparatus 1 is the same as that of the comparative example. Moreover, in the case where the degree of suction superheat SH of the compressor 4 is greater than about 17.5 degrees, while R290 refrigerant is added to the refrigerant in the refrigerant circuit 2 as long as the amount of the refrigerant in the refrigerant circuit 2 is less than or equal to the permissible amount of refrigerant, when the degree of suction superheat SH of the compressor 4 is less than or equal to 20.6 degrees, the coefficient of performance (COP) of the refrigeration cycle apparats 1 is the same as that of the comparative example.

According to the above-described configuration, it is found, from the relation between the rate of decrease of the coefficient of performance (COP) and the rate of addition of R290 refrigerant to the refrigerant in the refrigerant circuit 2, that, in the refrigeration cycle apparatus 1 of the embodiment, the coefficient of performance (COP) of the refrigeration cycle apparatus can be made the same as that of the comparative example, while maintaining the amount of the refrigerant circulating in the refrigerant circuit 2 less than or equal to the permissible amount of refrigerant, if the degree of suction superheat SH of the compressor 4 is greater than or equal to 15.4 degrees and less than or equal to 20.6 degrees.

In the second embodiment, the opening degree of the expansion valve 6 is controlled by the controller 3, and thereby the degree of suction superheat SH of the compressor 4 is made greater than or equal to 15.4 degrees and less than or equal to 20.6 degrees. Other configurations of the second embodiment are the same as those of the first embodiment.

In the refrigeration cycle apparatus 1 according to the second embodiment, because the degree of suction superheat SH of the compressor 4 is controlled by the controller 3 and caused to fall within a range from 15.4 degrees to 20.6 degrees, it is possible to further and certainly suppress degradation of the coefficient of performance (COP) of the refrigeration cycle apparatus 1, while maintaining the amount of refrigerant circulating in the refrigerant circuit 2 less than or equal to the permissible amount of refrigerant.

### Third embodiment (not according to the invention)

A configuration of a refrigeration cycle apparatus according to a third embodiment is the same as the configuration of the refrigeration cycle apparatus 1 according to the first embodiment, shown in FIG. 1, except for a state of an expansion valve 6 when an operation of a refrigerant circuit 2 starts. A controller 3 in the third embodiment causes the operation of the refrigerant circuit 2 to start in a state where an opening degree of the expansion valve 6 is smaller than an opening degree of the expansion valve 6 in a full open state. Moreover, during a cooling operation, the controller 3 controls the opening degree of the expansion valve 6 based on data about temperatures detected at a suction temperature sensor 21 and a second refrigerant port temperature sensor 23, respectively, after a set period of time from when the refrigerant circuit 2 starts its operation. During a heating operation, the controller 3 controls the opening degree of the expansion valve 6 based on data about temperatures detected at the suction temperature sensor 21 and a first refrigerant port temperature sensor 22, respectively, after the set period of time from when the refrigerant circuit 2 starts its operation. The controller 3 controls the opening degree of the expansion valve 6, and thereby set the degree of suction superheat SH of the compressor 4 to 10 degrees or more. Other configurations are the same as those in the first embodiment.

In the refrigeration cycle apparatus 1 according to the embodiment, under the control of the controller 3, in a state where the opening degree of the expansion valve 6 is smaller than the opening degree of the expansion valve 6 in the full open state, the operation of the refrigerant circuit 2 starts. Thus, enlarging the degree of suction superheat SH of the compressor 4 can be accelerated, and increasing the discharge temperature of refrigerant at the exit port of the compressor 4 can be accelerated. According to the above-described configuration, it becomes possible to reduce time until the refrigeration cycle apparatus 1 exhibits its performance, compared with the case of starting the operation of the refrigerant circuit 2 in a state where the expansion valve 6 is fully opened.

Specifically, when the degrees of suction superheat SH of the compressor 4 are the same, the discharge temperature of refrigerant at the exit port of the compressor 4 with R290 refrigerant used in the refrigerant circuit 2 is lower than that with R32 refrigerant used in the refrigerant circuit 2. For example, in the refrigeration cycle apparatus 1 with the refrigeration performance of 4.0 kW and the degree of suction superheat SH of the compressor 4 of 10 degrees, the discharge temperature when R290 refrigerant is used as refrigerant of the refrigerant circuit 2 is 63 °C, but the discharge temperature when R32 refrigerant is used as refrigerant of the refrigerant circuit 2 is 89 °C. Then, in the case of using R290 refrigerant in the refrigerant circuit 2, it takes time to increase the discharge temperature of refrigerant at the exit port the compressor 4. Thus, when the operation of the refrigerant circuit 2 starts in a state where the expansion valve 6 is fully opened, it takes time for a cooling operation, a heating operation and a defrosting operation. However in the third embodiment, because the opening degree of the expansion valve 6 is preliminarily closed, it becomes possible to reduce the time until the discharge temperature of refrigerant at the exit port of the compressor 4 reaches a set temperature to, for example, two third in the case of starting the operation of the refrigerant circuit 2 in the state where the opening degree of the expansion valve 6 is fully opened. According to the above-described configuration, it is possible to reduce the time until the refrigeration cycle apparatus 1 exhibits its performance.

In the above-described example, the configuration of starting the operation of the refrigerant circuit 2 in the state where the opening degree of the expansion valve 6 is less than that in the full open state of the expansion valve 6 is applied to the refrigeration cycle apparatus 1 according to the first embodiment. However, the configuration of starting the operation of the refrigerant circuit 2 in the state where the opening degree of the expansion valve 6 is less than that in the full open state of the expansion valve 6 may be applied to the refrigeration cycle apparatus 1 according to the second embodiment.

### Fourth embodiment (according to the invention)

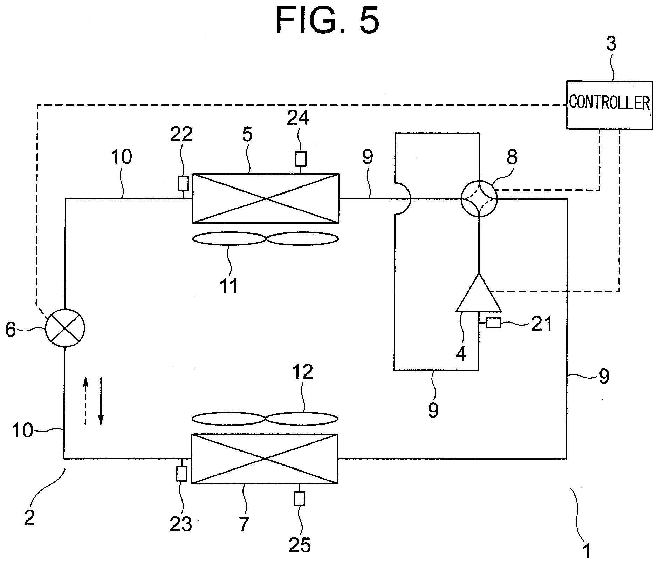

FIG. 5 is a diagram depicting a configuration of a refrigeration cycle apparatus according to a fourth embodiment of the present invention. In a heat transfer pipe of a first heat exchanger 5, a first inner temperature sensor 24 for detecting temperature of refrigerant is provided. A length of the heat transfer pipe between a refrigerant port on the expansion valve 6 side of the first heat exchanger 5 and the first inner temperature sensor 24 is 66% to 88% of the length of the heat transfer pipe between one refrigerant port of the first heat exchanger 5 and the other refrigerant port.

Specifically, a first refrigerant port temperature sensor 22 is provided at an entrance port of the first heat exchanger 5 when the first heat exchanger 5 is an evaporator. Moreover, when the first heat exchanger 5 is an evaporator, a length of the heat transfer pipe between the entrance port of the first heat exchanger 5 and the first inner temperature sensor 24 is 66% to 88% of a length of the heat transfer pipe between the entrance port and the exit port of the first heat exchanger 5.

In a heat transfer pipe of a second heat exchanger 7, a second inner temperature sensor 25 for detecting temperature of refrigerant is provided. A length of the heat transfer pipe between a refrigerant port on the expansion valve 6 side of the second heat exchanger 7 and the second inner temperature sensor 25 is 66% to 88% of the length of the heat transfer pipe between one refrigerant port of the second heat exchanger 7 and the other refrigerant port.

Specifically, a second refrigerant port temperature sensor 23 is provided at an entrance port of the second heat exchanger 7 when the second heat exchanger 7 is an evaporator. Moreover, when the second heat exchanger 7 is an evaporator, a length of the heat transfer pipe between the entrance port of the second heat exchanger 7 and the second inner temperature sensor 25 is 66% to 88% of a length of the heat transfer pipe between the entrance port and the exit port of the second heat exchanger 7.

Data about the temperatures detected at the suction temperature sensor 21, the first refrigerant port temperature sensor 22, the second refrigerant port temperature sensor 23, the first inner temperature sensor 24 and the second inner temperature sensor 25 are sent to the controller 3. The controller 3 controls the opening degree of the expansion valve 6 based on the data about the temperatures detected at the suction temperature sensor 21, the first refrigerant port temperature sensor 22, the second refrigerant port temperature sensor 23, the first inner temperature sensor 24 and the second inner temperature sensor 25.

The controller 3 sets the degree of suction superheat SH of the compressor 4 to a value of 10 degrees or more by controlling the opening degree of the expansion valve 6, as in the first embodiment. Moreover, during the cooling operation, the controller 3 controls the opening degree of the expansion valve 6 so that the temperature detected at the second inner temperature sensor 25 is higher than the temperature detected at the second refrigerant port temperature sensor 23. Furthermore, during the heating operation, the controller 3 controls the opening degree of the expansion valve 6 so that the temperature detected at the first inner temperature sensor 24 is higher than the temperature detected at the first refrigerant port temperature sensor 22. Specifically, the controller 3 controls the refrigerant circuit 2 so that the temperature Twmid detected at the inner temperature sensor of the first and second inner temperature sensors 24 and 25 that is provided at the entrance port of the evaporator is higher than the temperature Tein detected at the refrigerant port temperature sensor of the first and second refrigerant port temperature sensors 22 and 23 that is provided at the entrance port of the evaporator. That is, the controller 3 controls the opening degree of the expansion valve 6 so that a relation (detected temperature Twmid) - (detected temperature Tein) > 0 is satisfied. Other configurations are the same as those in the first embodiment.

In the above-described refrigeration cycle apparatus 1, the length of the heat transfer pipe between the entrance port of the evaporator and the inner temperature sensor is 66% to 88% of the length of the heat transfer pipe between the entrance port of the evaporator and the exit port of the evaporator. Moreover, the controller 3 controls the refrigerant circuit 2 so that the temperature Twmid detected at the inner temperature sensor is higher than the temperature Tein detected at the refrigerant port temperature sensor. Thus, it becomes possible to certainly put refrigerant flowing in the heat transfer pipe of the evaporator into a superheat state until the refrigerant reaches the exit port of the evaporator. According to the above-described configuration, it is possible to increase the degree of superheat of the refrigerant at the exit port of the evaporator, and set more certainly and more quickly the degree of suction superheat SH of the compressor 4 to a value of 10 degrees or more.

In the above-described example, the configuration of controlling the refrigerant circuit 2 so that the temperature Twmid detected at the inner temperature sensor provided in the evaporator is higher than the temperature Tein detected at the refrigerant port temperature sensor provided at the entrance port of the evaporator is applied to the refrigeration cycle apparatus according to the first embodiment. However, the configuration of controlling the refrigerant circuit 2 so that the temperature Twmid detected at the inner temperature sensor is higher than the temperature Tein detected at the refrigerant port temperature sensor may be applied to the refrigeration cycle apparatuses according to the second and third embodiments.

### Fifth embodiment (not according to the invention)

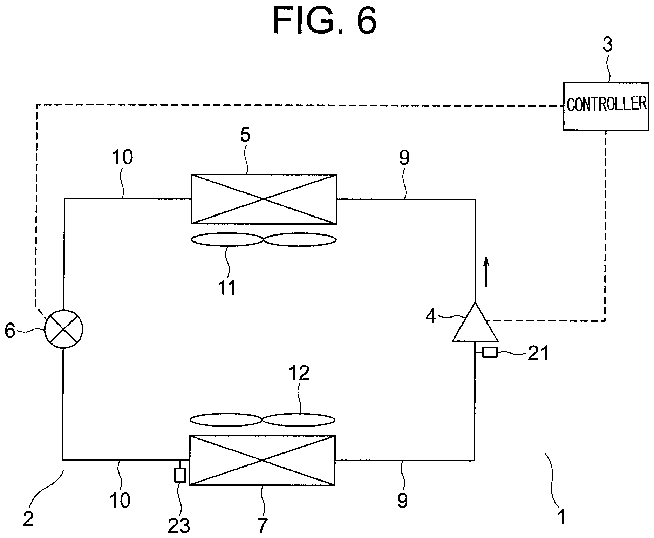

FIG. 6 is a diagram depicting a configuration of a refrigeration cycle apparatus according to a fifth embodiment.

The refrigeration cycle apparatus 1 is provided with a refrigerant circuit 2 including a compressor 4, a first heat exchanger 5, an expansion valve 6 and a second heat exchanger 7. In the fifth embodiment, a four-way valve is not present in the refrigeration cycle apparatus 1. Thus, the refrigeration cycle apparatus 1 according to the fifth embodiment is not provided with a function of switching between a cooling operation and a heating operation. Refrigerant circulating in the refrigerant circuit 2 is R290 refrigerant. In the fifth embodiment, the refrigeration cycle apparatus is applied to a refrigerator.

Each of the first heat exchanger 5 and the second heat exchanger 7 is connected to the compressor 4 via a gas-side refrigerant pipe 9. According to the above-described configuration, each of the first heat exchanger 5 and the second heat exchanger 7 is connected to the compressor 4 via a gas-side refrigerant path for guiding refrigerant.

Moreover, each of the first heat exchanger 5 and the second heat exchanger 7 is connected to the expansion valve 6 via a liquid-side refrigerant pipe 10. According to the above-described configuration, each of the first heat exchanger 5 and the second heat exchanger 7 is connected to the expansion valve 6 via a liquid-side refrigerant path for guiding refrigerant.

In the refrigerant circuit 2, a refrigeration cycle process is performed, in which refrigerant circulates through the compressor 4, the first heat exchanger 5, the expansion valve 6 and the second heat exchanger 7 while changing in phase, according to the operation of the compressor 4. In FIG. 6, refrigerant circulating in the refrigerant circuit 2 flows along a direction indicated by an arrow. In the fifth embodiment, the compressor 4 and the first heat exchanger 5 and the expansion valve 6 are provided in an outdoor unit, and the second heat exchanger 7 is provided in an indoor unit.

The outdoor unit is provided with a first fan 11 that forcibly sends outdoor air to the first heat exchanger 5. The indoor unit is provided with a second fan 12 that forcibly sends indoor air to the second heat exchanger 7.

In the first heat exchanger 5, heat exchange is performed between refrigerant that flows in the heat transfer pipe of the first heat exchanger 5 and a current of outdoor air generated by an operation of the first fan 11. In the second heat exchanger 7, heat exchange is performed between refrigerant that flows in the heat transfer pipe of the second heat exchanger 7 and a current of indoor air generated by an operation of the second fan 12.

In the operation of the refrigeration cycle apparatus 1, gaseous refrigerant compressed in the compressor 4 is sent to the first heat exchanger 5 through the gas-side refrigerant path. In the first heat exchanger 5, refrigerant is condensed according to heat dissipation from the refrigerant flowing through the heat transfer pipe to the outdoor air. Thus, the first heat exchanger 5 operates as a condenser. Then, the condensed refrigerant is sent to the expansion valve 6 through the liquid-side refrigerant path. In the expansion valve 6, a pressure of the liquid refrigerant is reduced, and the liquid refrigerant becomes refrigerant in a gas-liquid two-phase state. The refrigerant with the pressure reduced by the expansion valve 6 is sent to the second heat exchanger 7 through the liquid-side refrigerant path. Then, the refrigerant with the reduced pressure absorbs heat from indoor air at the second heat exchanger 7, and evaporates. Thus, the second heat exchanger 7 operates as an evaporator. The refrigerant evaporates at the second heat exchanger 7, which operates as an evaporator, and returns to the compressor 4 through the gas-side refrigerant path.

At the entrance port of the second heat exchanger 7, which is an evaporator, a second refrigerant port temperature sensor 23 is provided. The controller 3 controls the opening degree of the expansion valve 6 based on temperatures of refrigerants detected by a suction temperature sensor 21 and the second refrigerant port temperature sensor 23, respectively, and thereby sets the degree of suction superheat SH of the compressor 4 to a value of 10 degrees or more. Other configurations are the same as those in the first embodiment.

According to the above-described configuration, even in the refrigeration cycle apparatus that is not provided with the function of switching between the cooling operation and the heating operation, it is possible to set the degree of suction superheat SH of the compressor 4 to a value of 10 degrees or more by using R290 refrigerant as refrigerant circulating in the refrigerant circuit 2. Moreover, inner diameters of the heat transfer pipes of the first heat exchanger 5 and the second heat exchanger 7, respectively, are set to be less than 5 mm. Thus, it is possible to suppress degradation of efficiency of heat exchange at each of the first heat exchanger 5 and the second heat exchanger 7, and reduce an amount of refrigerant circulating in the refrigerant circuit 2 to a permissible amount of refrigerant or less. Furthermore, because R290 refrigerant is used as refrigerant circulating in the refrigerant circuit 2, it is possible to suppress degradation of the coefficient of performance (COP) of the refrigeration cycle apparatus 1, even when the amount of refrigerant circulating in the refrigerant circuit 2 becomes smaller.

In the above-described example, the degree of suction superheat SH of the compressor 4 may be limited so as to fall within a range from 15.4 degrees to 20.6 degrees, according to the control by the controller 3, as in the second embodiment. In this way, it is possible to certainly suppress degradation of the coefficient of performance (COP) of the refrigeration cycle apparatus 1, while maintaining the amount of refrigerant circulating through the refrigerant circuit 2 at the permissible amount of refrigerant or less.

Moreover, in the fifth embodiment, the configuration of the refrigeration cycle apparatus 1 which is not provided with the function of switching between a cooling operation and a heating operation is applied to the refrigeration cycle apparatus 1 according to the first embodiment. However, the configuration of the refrigeration cycle apparatus 1 which is not provided with the function of switching between a cooling operation and a heating operation may be applied to the refrigeration cycle apparatuses 1 according to the third and fourth embodiments.

Moreover, in the above-described first to fifth embodiments, R290 refrigerant is used as refrigerant circulating through the refrigerant circuit 2. However, R1270 refrigerant, which is propylene, may be used as refrigerant circulating through the refrigerant circuit 2. Because R1270 refrigerant has the same property as that of R290 refrigerant, even when R1270 refrigerant is used as refrigerant circulating through the refrigerant circuit 2, the same effect as that in the case of using R290 refrigerant in the refrigerant circuit 2 can be obtained.

In the above-described first to fifth embodiments, R290 refrigerant that contains only propane is used as refrigerant circulating through the refrigerant circuit 2. However, when at least one of propane and propylene are contained in the refrigerant circulating through the refrigerant circuit 2, the refrigerant has the property that the theoretical COP increases as the degree of suction superheat SH of the compressor 4 increases. Thus, even in the case where a component other than propane and propylene is contained in refrigerant, when propane or propylene is contained in the refrigerant, it is possible to use the refrigerant as refrigerant circulating through the refrigerant circuit 2.

In the above-described first to fifth embodiments, the degree of suction superheat SH of the compressor 4 is controlled by controlling the expansion valve 6 based on the temperature of refrigerant at the entrance port of the compressor 4 and the temperature of refrigerant at the entrance port of the evaporator. However, the degree of suction superheat SH of the compressor 4 may be controlled by controlling the expansion valve 6 based on the discharge temperature of refrigerant at the exit port of the compressor 4 and the temperature of refrigerant at the entrance port of the evaporator. In this case, a discharge temperature sensor for detecting the temperature of refrigerant is provided at the exit port of the compressor 4. Moreover, in this case, the controller 3 controls the opening degree of the expansion valve 6 based on the data about the temperatures detected at the refrigerant port temperature sensor provided at the entrance port of the evaporator and the discharge temperature sensor provided at the exit port of the compressor 4, respectively.

Moreover, in the above-described first to fifth embodiments, the degree of suction superheat SH of the compressor 4 is controlled by controlling the opening degree of the expansion valve 6. However, the degree of suction superheat SH of the compressor 4 may be controlled by controlling the output of the compressor 4.

### Reference Signs List

1 refrigeration cycle apparatus, 2 refrigerant circuit, 3 controller, 4 compressor, 5 first heat exchanger (condenser or evaporator), 6 expansion valve (pressure-reducing device), 7 second heat exchanger (evaporator or condenser), 22 first refrigerant port temperature sensor, 23 second refrigerant port temperature sensor, 24 first inner temperature sensor, 25 second inner temperature sensor.

## Claims

1. A refrigeration cycle apparatus (1) comprising:
a refrigerant circuit (2) including
a compressor (4),
a condenser (5, 7),
a pressure-reducing device (6), and
an evaporator (5, 7); and
a controller (3) configured to control the refrigerant circuit (2), wherein
refrigerant circulating through the refrigerant circuit (2) is refrigerant containing propane or propylene,
the evaporator (5, 7) has a heat transfer pipe in which refrigerant flows,
a refrigerant port temperature sensor (22, 23) for detecting temperature of refrigerant is provided at an entrance port of the evaporator (5, 7),
an inner temperature sensor (24, 25) for detecting temperature of refrigerant is provided in the heat transfer pipe of the evaporator (5, 7), **characterized in that**,
in the evaporator (5, 7), a length of the heat transfer pipe between the entrance port of the evaporator (5, 7) and the inner temperature sensor (24, 25) is greater than or equal to 66% of a length of the heat transfer pipe between the entrance port of the evaporator (5, 7) and an exit port of the evaporator (5, 7), and less than or equal to 88% of the length of the heat transfer pipe between the entrance port and the exit port,
the controller (3) configured to set a degree of superheat of refrigerant at an entrance port of the compressor (4) to be a value greater than or equal to 10 degrees by controlling the opening degree of the pressure-reducing device (6) , and
the controller (3) configured to control the opening degree of the pressure-reducing device (6) so that the temperature of refrigerant detected by the inner temperature sensor (24, 25) is higher than the temperature of refrigerant detected by the refrigerant port temperature sensor (22, 23).

2. The refrigeration cycle apparatus (1) according to claim 1, wherein the controller (3) is configured to set the degree of superheat of refrigerant at the entrance port of the compressor (4) to be a value greater than or equal to 15.4 degrees and less than or equal to 20.6 degrees.

3. The refrigeration cycle apparatus (1) according to claim 1 or 2, wherein the controller (3) is configured to start an operation of the refrigerant circuit (2) in a state where an opening degree of the pressure-reducing device (6) is smaller than an opening degree of the pressure-reducing device (6) in a full open state.

4. The refrigeration cycle apparatus (1) according to any one of claims 1 to 3, wherein
the condenser (5, 7) has a heat transfer pipe in which refrigerant flows,
an inner diameter of the heat transfer pipe of each of the condenser (5, 7) and the evaporator (5, 7) is less than or equal to 5 mm.

5. The refrigeration cycle apparatus (1) according of any one of claims 1 to 4, wherein
each of the condenser (5, 7) and the evaporator (5, 7) is connected to the compressor (4) via a gas-side refrigerant path,
each of the condenser (5, 7) and the evaporator (5, 7) is connected to the pressure-reducing device (6) via a liquid-side refrigerant path,
an inner diameter of the gas-side refrigerant path is greater than or equal to 7.92 mm and less than or equal to 14.28 mm,
an inner diameter of the liquid-side refrigerant path is greater than or equal to 4.75 mm and less than or equal to 11.1 mm, and
a length of each of the gas-side refrigerant path and the liquid-side refrigerant path is less than or equal to 5 m.

## Patentansprüche

1. Kältekreislaufvorrichtung (1), umfassend:
einen Kältemittelkreislauf (2), aufweisend:
einen Verdichter (4),
einen Kondensator (5, 7),
eine Druckreduziereinrichtung (6), und
einen Verdampfer (5, 7); und
eine Steuereinheit (3), die eingerichtet ist, den Kältemittelkreislauf (2) zu steuern, wobei
das durch den Kältemittelkreislauf (2) zirkulierende Kältemittel propanhaltiges oder propylenhaltiges Kältemittel ist,
wobei der Verdampfer (5, 7) eine Wärmeübertragungsleitung aufweist, in welcher Kältemittel strömt,
wobei ein Kältemittel-Öffnung-Temperatursensor (22, 23) zum Erfassen einer Temperatur von Kältemittel an einer Eingangsöffnung des Verdampfers (5, 7) bereitgestellt ist,
wobei ein Innentemperatursensor (24, 25) zum Erfassen einer Temperatur von Kältemittel in der Wärmeübertragungsleitung des Verdampfers (5, 7) bereitgestellt ist, **dadurch gekennzeichnet, dass**
in dem Verdampfer (5, 7) eine Länge der Wärmeübertragungsleitung zwischen der Eingangsöffnung des Verdampfers (5, 7) und dem Innentemperatursensor (24, 25) größer als oder gleich 66% einer Länge der Wärmeübertragungsleitung zwischen der Eingangsöffnung des Verdampfers (5, 7) und einer Ausgangsöffnung des Verdampfers (5, 7) und kleiner als oder gleich 88% der Länge der Wärmeübertragungsleitung zwischen der Eingangsöffnung und der Ausgangsöffnung ist,
wobei die Steuereinheit (3) eingerichtet ist, einen Grad von Überhitzung von Kältemittel an einer Eingangsöffnung des Verdichters (4) einzustellen, um ein Wert größer als oder gleich 10 Grad zu sein, durch Steuern des Öffnungsgrades der Druckreduziereinrichtung (6), und
die Steuereinheit (3) eingerichtet ist, den Öffnungsgrad der Druckreduziereinrichtung (6) zu steuern, so dass die durch den Innentemperatursensor (24, 25) erfasste Temperatur von Kältemittel höher ist als die durch den Kältemittel-Öffnung-Temperatursensor (22, 23) erfasste Temperatur von Kältemittel.

2. Kältekreislaufvorrichtung (1) nach Anspruch 1,
wobei die Steuereinheit (3) eingerichtet ist, den Grad von Überhitzung von Kältemittel an der Eingangsöffnung des Verdichters (4) einzustellen, ein Wert größer als oder gleich 15,4 Grad und kleiner als oder gleich 20,6 Grad zu sein.

3. Kältekreislaufvorrichtung (1) nach Anspruch 1 oder 2,
wobei die Steuereinheit (3) eingerichtet ist, einen Betrieb des Kältemittelkreislaufs (2) in einem Zustand zu starten, in dem ein Öffnungsgrad der Druckreduziereinrichtung (6) kleiner ist als ein Öffnungsgrad der Druckreduziereinrichtung (6) in einem vollständig geöffneten Zustand.

4. Kältekreislaufvorrichtung (1) nach einem der Ansprüche 1 bis 3, wobei
der Kondensator (5, 7) eine Wärmeübertragungsleitung aufweist, in welcher Kältemittel strömt,
ein Innendurchmesser der Wärmeübertragungsleitung von jedem von dem Kondensator (5, 7) und dem Verdampfer (5, 7) kleiner als oder gleich 5 mm ist.

5. Kältekreislaufvorrichtung (1) nach einem der Ansprüche 1 bis 4, wobei
jeder von dem Kondensator (5, 7) und dem Verdampfer (5, 7) über einen gasseitigen Kältemittelpfad mit dem Verdichter (4) verbunden ist,
jeder von dem Kondensator (5, 7) und dem Verdampfer (5, 7) über einen flüssigkeitsseitigen Kältemittelpfad mit der Druckreduziereinrichtung (6) verbunden ist,
ein Innendurchmesser des gasseitigen Kältemittelpfads größer als oder gleich 7,92 mm und kleiner als oder gleich 14,28 mm ist,
ein Innendurchmesser des flüssigkeitsseitigen Kältemittelpfads größer als oder gleich 4,75 mm und kleiner als oder gleich 11,1 mm ist und
eine Länge von jedem von dem gasseitigen Kältemittelpfad und dem flüssigkeitsseitigen Kältemittelpfad jeweils kleiner als oder gleich 5 m ist.

## Revendications

1. Appareil à cycle de réfrigération (1) comprenant :
un circuit de fluide frigorigène (2) comportant
un compresseur (4),
un condenseur (5, 7),
un dispositif de réduction de pression (6), et
un évaporateur (5, 7) ; et
un dispositif de commande (3) configuré pour commander le circuit de fluide frigorigène (2), dans lequel
le fluide frigorigène circulant à travers le circuit de fluide frigorigène (2) est un fluide frigorigène contenant du propane ou du propylène,
l'évaporateur (5, 7) a un tube de transfert de chaleur dans lequel s'écoule le fluide frigorigène,
un capteur de température d'orifice de fluide frigorigène (22, 23) pour détecter la température de fluide frigorigène est prévu au niveau d'un orifice d'entrée de l'évaporateur (5, 7),
un capteur de température interne (24, 25) pour détecter la température de fluide frigorigène est prévu dans le tube de transfert de chaleur de l'évaporateur (5, 7), **caractérisé en ce que**,
dans l'évaporateur (5, 7), une longueur du tube de transfert de chaleur entre l'orifice d'entrée de l'évaporateur (5, 7) et le capteur de température interne (24, 25) est supérieure ou égale à 66 % d'une longueur du tube de transfert de chaleur entre l'orifice d'entrée de l'évaporateur (5, 7) et un orifice de sortie de l'évaporateur (5, 7), et inférieure ou égale à 88 % de la longueur du tube de transfert de chaleur entre l'orifice d'entrée et l'orifice de sortie,
le dispositif de commande (3) étant configuré pour établir un degré de surchauffe du fluide frigorigène au niveau d'un orifice d'entrée du compresseur (4) à une valeur supérieure ou égale à 10 degrés par commande du degré d'ouverture du dispositif de réduction de pression (6), et
le dispositif de commande (3) étant configuré pour commander le degré d'ouverture du dispositif de réduction de pression (6) de sorte que la température de fluide frigorigène détectée par le capteur de température interne (24, 25) soit plus élevée que la température de fluide frigorigène détectée par le capteur de température d'orifice de fluide frigorigène (22, 23).

2. Appareil à cycle de réfrigération (1) selon la revendication 1,
dans lequel le dispositif de commande (3) est configuré pour établir le degré de surchauffe de fluide frigorigène au niveau de l'orifice d'entrée du compresseur (4) à une valeur supérieure ou égale à 15,4 degrés et inférieure ou égale à 20,6 degrés.

3. Appareil à cycle de réfrigération (1) selon la revendication 1 ou 2,
dans lequel le dispositif de commande (3) est configuré pour démarrer un fonctionnement du circuit de fluide frigorigène (2) dans un état où un degré d'ouverture du dispositif de réduction de pression (6) est plus petit qu'un degré d'ouverture du dispositif de réduction de pression (6) dans un état complètement ouvert.

4. Appareil à cycle de réfrigération (1) selon l'une quelconque des revendications 1 à 3, dans lequel
le condenseur (5, 7) a un tube de transfert de chaleur dans lequel s'écoule le fluide frigorigène,
un diamètre interne du tube de transfert de chaleur de chacun du condenseur (5, 7) et de l'évaporateur (5, 7) est inférieur ou égal à 5 mm.

5. Appareil à cycle de réfrigération (1) selon l'une quelconque des revendications 1 à 4, dans lequel
chacun du condenseur (5, 7) et de l'évaporateur (5, 7) est raccordé au compresseur (4) via un trajet de fluide frigorigène côté gaz,
chacun du condenseur (5, 7) et de l'évaporateur (5, 7) est raccordé au dispositif de réduction de pression (6) via un trajet de fluide frigorigène côté liquide,
un diamètre interne du trajet de fluide frigorigène côté gaz est supérieur ou égal à 7,92 mm et inférieur ou égal à 14,28 mm,
un diamètre interne du trajet de fluide frigorigène côté liquide est supérieur ou égal à 4,75 mm et inférieur ou égal à 11,1 mm, et
une longueur de chacun du trajet de fluide frigorigène côté gaz et du trajet de fluide frigorigène côté liquide est inférieure ou égale à 5 m.
